# EUROPEAN PATENT SPECIFICATION

(11) **EP 1 485 824 B1**
(45) Date of publication and mention of the grant of the patent: **03.08.2016**
(21) Application number: 03703594.6
(22) Date of filing: 31.01.2003
(51) Int. Cl.: H04H 20/40, H04H 20/00, H04H 60/27, H04L 12/18, G06F 17/30, H04H 60/73

(54) **A SYSTEM AND A METHOD RELATING TO COMMUNICATION OF DATA**
SYSTEM UND VERFAHREN BEZÜGLICH DATENKOMMUNIKATION
SYSTEME ET PROCEDE ASSOCIES A LA COMMUNICATION DE DONNEES

(30) Priority: 15.02.2002 SE 0200471
(43) Date of publication of application: 15.12.2004
(73) Proprietor: Telefonaktiebolaget LM Ericsson (publ), 164 83 Stockholm (SE)
(72) Inventor: SVANBRO, Krister, S-975 75 Lulea (SE); LINDAHL, Göthe, S-905 94 Umea (SE); JONSSON, Erik, S-903 32 Umea (SE); ROSENQVIST, Erik, S-903 37 Umea (SE); WIKSTRAND, Greger, S-903 37 Umea (SE)
(74) Representative: Brann AB
(86) International application number: PCT/SE2003/000177
(87) International publication number: WO 2003/069507

(56) References cited:
- EP-A2- 0 853 287
- WO-A1-00/44169
- WO-A1-02/49343
- US-B1- 6 338 094
- US-B1- 6 349 339

## Description

### FIELD OF THE INVENTION

The present invention relates to a system for communication of data, e.g. multimedia content, over a wireless network connecting a plurality of end user stations, which system supports broadcast/multicast transmission. The invention also relates to a central server in such a system and to an end user station in such a system. The inventive concept also covers a method for communication of data, such as multimedia content, over a wireless network connecting a plurality of end user stations and supporting broadcast/multicast transmission.

### STATE OF THE ART

In a wireless network the bandwidth that is available for each respective end user station or, for each device, is very limited. Therefore it is in principle impossible to be able to serve a large number of simultaneous requests for larger amounts of data information, such as for example multimedia content. In for example Hiperlan/2, 250 users share a bandwidth of 25 Mbps at the IP layer (layer 3). This gives 100 kbps per end user. In IEEE 802.11b, according to which there may be maximum 1020 users in a network, a typical implementation will be able to handle 63 users. Based on the 1020 users of the standard, there will be 6 kbps available for each user. This gives about 95 kbps per end user. It is moreover realistic to assume that for example only half of that capacity actually can be used at any one time due to for example radio transmission problems, buffer overruns etc. This will result in a situation in which for example only 50 kbps is available for each user. If for example some kind of multimedia content, such as video clips, is to be transferred, in order to assure an acceptable quality, it requires encoding at 128-500 kbps. If only a few clients request to be served at the same time, or at once, or for example if the clips are short, it may be possible to ignore the problems, but as soon as a larger number of end users simultaneously request to be served, the problems will indeed be severe. Different suggestions to the problems have been given. One suggestion is to vary the bandwidth and for example by all means transmit at 50 kbps. This can be done by encoding the stream using multilayer encoding so that the quality goes down automatically when packets are dropped for example due to congestion, interference or bit errors. It is also possible to negotiate the bandwidth requirements between the client and the server. As far as video clips are concerned, it could also be possible to vary the dimensions of the clip in order to save bandwidth. This would reduce the time a user would have to wait. By for example reducing the display size of an end user station to one tenth of its maximum size, the number of simultaneous accesses could be considerably increased. Another suggestion has been to change the clip length etc.

Still another suggestion has been to force user clients to cooperate. When a user client requests a clip from the server, it has to wait x seconds, such that the server can see if any other user clients in the same segment of the wireless network do want the same clip. However, in the worst case the user might have to wait x seconds for nothing. To summarize, all these approaches will result in a decreased quality and increased delays when there is congestion, or when several users simultaneously request access to the same content. Thus none of these proposals function satisfactorily.

An example when such problems, as initially referred to, occur are for example at an arena having thousands of spectators. Many of the spectators will have for example Personal Digital Assistants (PDA) or similar devices that can be connected to an IP network. However, if as many spectators as possible should be reached, i.e. if it should be possible to provide them with individual audio/video information, bandwidth availability would be a serious problem. In order to offer reruns and video on demand today to a PDA on an IP network, the unicast streaming video method is used. In that manner several users can be served, but it is not sufficient for large number of end user stations in so called hotspots in which a huge number of end users are gathered.

US-A-0 595 6716 describes a local storage and retrieval unit (SRU) that temporarily stores video clips downloaded by several extended SRUs to display the video clip in a multimedia terminal. It is however not attractive for practical reasons to use a special storing device in a hot spot since there may be a large amount of people in a crowd. US-A-5 854 887 discloses a system in which clips will be made available, not based on current network load, but only to a fixed figure. That system does also not function satisfactorily when there is a large number of simultaneous requesters for multimedia data, that is predictable.

Thus, today, there is no satisfactorily functioning system or method known which is able to handle the problems initially referred to.

### SUMMARY OF THE INVENTION

It is therefore an object of the present invention to provide a system through which it gets possible to provide end user stations with access to data information over a wireless network even if there is a large, or even huge, number of end user stations within a limited area requesting access at more or less the same time. It is also an object of the invention to be able to serve as many end user stations as possible, if they for example are gathered in a so called hotspot, by giving them quick access to the requested data information. Particularly it is an object to enable access for end user stations to individually selected data information at substantially individually selected times from a multimedia presentation. Particularly it is an object of the invention to, also at so called hotspots, be able to offer customized access to data information, such as multimedia content, live or in the form of clips. Particularly it is an object to provide also a large number of end user stations with customized access to live content, e.g. video, video clips, audio, web pages, relevant information in general or any files or applications in an easy and flexible manner. Particularly it is an object of the present invention to provide a system which is easy to implement and which is able to provide the end user with freedom and flexibility as far as (multimedia) data requests are concerned. It is also an object of the present invention to be able to provide end user stations with wireless access to requested or appropriate data depending on where end user is located in an easy and fast manner. Particularly it is an object of the invention to provide a system which allows end user access in a customized manner to different kinds of data information, multimedia content, or files etc. in a very fast manner and while still maintaining a high quality, particularly giving the end user the option to rerun or replay, i.e. retrieve, the desired data information whenever he wants to, and as many times as he wants.

It is also an object of the.present invention to provide an end user station through which one or more of the above mentioned objects can be achieved, as well as a central server means through which the end user stations can be provided with easy and flexible, customized representation as referred to above. Particularly it is an object to provide end user stations which are easy to fabricate and easy to use. Particularly it is an object to provide end user stations which, in combination with a central server of a system as referred to above, allows an end user to flexibly select which data information he wants to be presented with and when he wants to be presented with the data information, how many times etc., particularly irrespectively of there being a large number of simultaneously requesting other end user stations. It is also particularly an object to provide an end user station through which an end user can be provided with relevant data information depending on where in the network the end user station is located and to allow the station to obtain the relevant information at the relevant time and at the relevant place.

It is also an object of the invention to provide a central server means which is able to provide end user stations with the above mentioned facilities. Still further it is an object of the invention to provide a method through which one or more of the above mentioned objects can be achieved.

Therefore a system as initially referred to is provided, which comprises a central server means with at least one central cache arrangement for storing at least selected parts of data information relevant for at least a segment of the wireless network. The central server means also comprises transmission scheduling means for transmission scheduling, a central cache arrangement control means for, by using information from the transmission scheduling means, controlling a central cache arrangement push engine for multicast/broadcast pushing of information to end user stations within the at least one segment of the wireless network. The end user stations comprise, or are associated with, each a proprietary or local push content caching means for holding the pushed data information. Upon request by the respective end user, selected data information will be presented to the end user in a customized manner via the end user station user client, by retrieval from said local, proprietary caching means.

In a particular implementation a segment of a network corresponds to a local area or part of the wireless network. Particularly a segment corresponds to a local part or area of the network with at least a temporarily large or huge amount of connected end user stations, forming a so called hot spot, e.g. a sports arena, a public place for spectacular events or any other location with a large number of simultaneously connected end user stations. In a particular implementation partly overlapping segments are implemented, to which particularly somewhat or slightly differing data information is pushed via multicast/broadcast. Even more particularly information can be exchanged between end user stations of said partly overlapping segments, in case an end user station is connected to a segment in which the desired information is not pushed to that end user station but to the other end user station in the other of the partly overlapping segments.

Preferably the pushed data information content is segment dependent, i.e. which data information that is pushed, depends on which is the segment, i.e. it is location dependent or interest dependent in overlapping segments. In one implementation the same content can be pushed to more than one segment of the wireless network. Particularly location detecting means are used, or e.g. a GPS (Global Positioning System), MPS (Mobile Positioning System), direct cell addressing etc. such that when an end user enters an area/a segment, the relevant information will automatically be pushed to its local push content storing means (the proprietary local cache).

In one embodiment the end user station client is allocated a segment at connecting to the system and entering an area corresponding to the segment, or at establishment of an end user usage pattern, according to another alternative.

The pushed data information may comprise multimedia information, files, web pages such as for example HTML, GIF, JPEG or any other file, video clips, live video, audio.

In a particular implementation one multicast/broadcast session is used to transmit several multimedia content/file/video clips, or web pages. In an alternative implementation a new multicast/broadcast session is opened for each multimedia content, e.g. (video) clip or web page or file transmission. Still further, a single multicast/broadcast channel can be used for each parallell distribution channel. Alternatively several multicast/broadcast sessions are used for each parallel distribution channel.

In a preferred implementation the central cache arrangement push engine is responsible for pushing data information content to the end user stations of more than one segment. The central cache arrangement push engine may also comprise several push engines, one for each segment. There may also be one central cache arrangement control means (and push engine) for each segment. Alternatively, one push engine can be responsible for more than one segment or one control means can be responsible for more than one segment.

Particularly the central cache arrangement comprises a number of subordinate cache control engines, one for each segment, and a superior, master, cache control engine controlling said subordinate cache control engines. Preferably said superior cache control engine is also responsible for coordinating transmissions and for handling end user station segment roaming.

In a preferred implementation the content information of the transmission scheduling means is communicated to the end user stations within the concerned segment allowing the end user to select data information, e.g. live content or content clips, for requests. The content information may for example be presented as lists or in any other appropriate manner to the end user stations. Lists of content are transmitted indicating the content that forms an entity.

Particularly the scheduling means uses an algorithm based on information about for example estimated/predicted content and end user demand, particularly minimizing the delay between end user request and actual presentation to the end user. Feedback from a number of end user stations may also be used.

In a particular implementation, for end user requests for live video streaming, the end user station client may connect separately to the live multicast/broadcast stream without having the content passing the local, proprietary cache.

Particularly retransmissions from the central server arrangement can be requested, and a time limit may be given, such that if transmission actually is due within the given time interval, no retransmission is requested from the cache engine, otherwise retransmission is requested.

The wireless network is preferably IP-based, but could also be used in WLAN IEEE 802.11a & b, HIPERLAN/2, 3 & 4, GSM, GPRS, EDGE, PDC, CDMA, WCDMA, CDMA2000, hybrid networks with DVB and a back-Channel, etc.

The invention also provides an end user station for use in a wireless network supporting communication of data information, e.g. multimedia content, which comprises or is associated with a proprietary, local push content caching means for holding data information pushed via multicast or broadcast transmission to the end user station by a central server means controlling pushing of data information to at least a segment of the wireless network in which the end user station is connected/located. Upon request selected information can be fetched from the local push content caching means to the client of the end user station in a customized manner, e.g. when the end user wants to use or access it, what the end user wants to be presented with, when the end user wants to be presented with the information and for example also how many times the end user station wants to be provided with the requested information.

In a particular implementation the end user station comprises means for receiving information about information pushed to, or to be pushed to, the end user station, e.g. a list or a schedule, such that the end user can base requests on said information to select the desired content to be presented at a relevant time or location. Even more particularly the proprietary, local push content cache comprises a proxy. The data information may comprise multimedia content such as live content, e.g. video, content, e.g. video clips, data information clips in general, web pages, audio, files such as HTML, GIF, JPEG or similar. In a particular implementation the end user station comprises a personal digital assistant (PDA), but it may also be other devices, particularly wireless and mobile, although the concept of course also covers non-mobile end user stations.

The invention also suggests a central server means in a wireless network which comprises at least one central cache arrangement for storing at least selected parts of data information relevant for at least a segment of the wireless network. The central server means further comprises transmission scheduling means, central cache arrangement control means for, by using information from the scheduling means, controlling a central cache arrangement push engine for automatically, via multicast/broadcast pushing selected information to wireless stations connected to the said at least one segment of the wireless network.

Particularly content information relating to the selected data information, e.g. multimedia content, live or clips, files etc. is provided (i.e. pushed) to the end user stations of the segment. Particularly the central cache arrangement comprises a number of cache control engines, one for each of a number of segments, and a superior, master, cache control engine controlling said subordinate cache control engines and preferably coordinating transmissions. Advantageously the central server means comprises one push engine for each of a number of segments, particularly one for each segment.

It is an advantage of the invention that it gets possible to send individually selected multimedia content on demand, e.g. files or content, or clips or live, or moving pictures to a large number of end user stations without having to rely on bandwidth consuming unicast on IP networks. As an example it will be very advantageous as far as reruns and multimedia content on demand applications on IP networks are concerned. It is also an advantage that relevant multimedia content can be presented to end user stations depending particularly on location, since the relevant multimedia content is pushed to the users which then can request it, using information about content, the way, the time etc. independently of whether a large number of other users substantially simultaneously request substantially the same multimedia content but for example selecting different parts of it etc, in an unsynchronized manner.

### BRIEF DESCRIPTION OF THE DRAWINGS

The invention will in the following be further described in a nonlimiting manner, and with reference to the accompanying drawings, in which:
- Fig. 1A: is a schematical overview of a system according to one implementation of the invention,
- Fig. 1B: is a very schematical overview of a system, indicating three different segments,
- Fig. 2: is a block diagram of the central server means of the system,
- Fig. 3: is a block diagram of an end user station (client side) of the system according to one embodiment,
- Fig. 4: is a block diagram on a functional level for one, simplified, embodiment of the invention,
- Fig. 5: is a block diagram on a functional level of another embodiment of the invention,
- Fig. 6: is a flow diagram describing one example on a scheduling procedure according to one embodiment,
- Fig. 7: is a flow diagram describing the flow on the transmitting (server) side according to one embodiment,
- Fig. 8: is a flow diagram describing the flow at the receiving (end user station or client) side of the system,
- Fig. 9: is a flow diagram describing the flow of the local proxy cache handler in a particular embodiment, and
- Fig. 10: is a block diagram which schematically illustrates implementation of the inventive concept to WWAN (Wireless Wide Area Network), e.g. GSM/GPRS and UMTS.

### DETAILED DESCRIPTION OF THE INVENTION

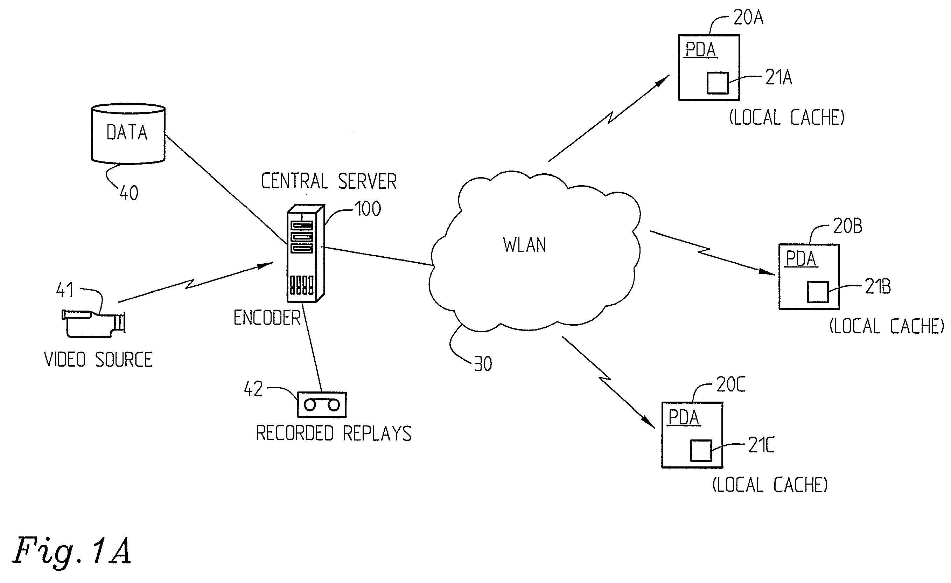

Fig. 1A shows a very general overview of a system according to the invention indicating one way that it can be implemented. The server means 100 here comprises encoding means and a server to which, in this particular embodiment, multimedia content as data 40, live video or video clips are provided from a video source 41, and in which recorded replays 42 are stored. In more general terms, when referring to video, clip etc. it should be clear that this is just as applicable to any other files such as HTML, GIF, JPEG etc., any content in form of clips or live, but for reasons of simplicity, in this implementation it is supposed that a video source or text, pictures etc. is/are captured, and a producer, which may be manual or automatic, picks out sequences supposed to be of interest. The producer also encodes and stores the relevant sequences on the server. In one implementation the producer tags the pieces of information or clips, files etc. with information like title or comments around the event. Any information like text, pictures, music etc. is treated in one and the same way, and in this document the data is denoted Cache Data Unit (CDU). The system automatically recognizes new CDUs and transmits them to a multicast/broadcast group. This transmission method is determined by the coder/decoder modules of the server means, 100. Via multicast (or broadcast) pushing the information or multimedia content (CDUs) are pushed to the respective end user stations 20A, 20B, 20C, which here are PDAs, automatically and before the content is requested by the end users. (A piece of multimedia content may be requested by some users, by others not, at different times, in various repeated manners.) The CDUs can be distributed to several multicast/broadcast groups, i.e. to one or more segments.

In Fig. 1A it is supposed that PDA 20A, 20B, 20C belong to one and the same segment and therefore receive the same data information from the central server means 100.

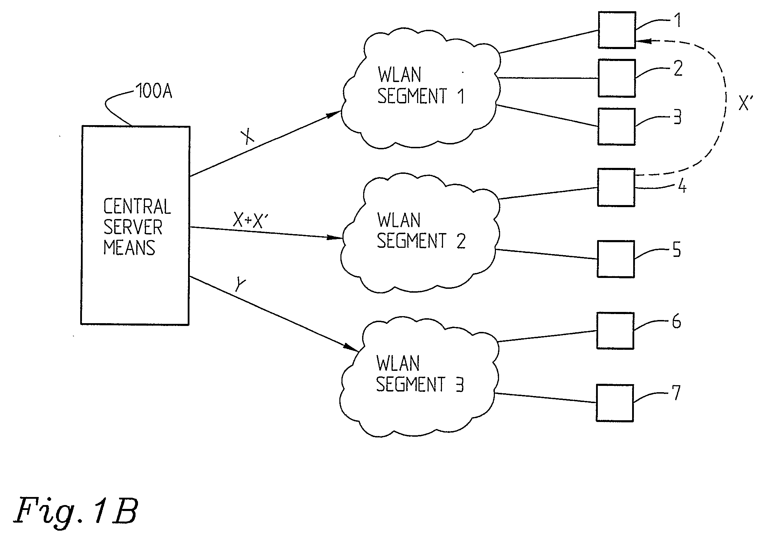

Fig. 1B is a figure similar to that of Fig. 1A, but wherein three different segments are illustrated. The same content x is pushed by the central server means 100A to segment 1 and 2 with a slight modification x' and an entirely different content y is provided to segment 3. If for example the Bluetooth concept is implemented, end user stations of segment 1, 2 can exchange information between them, i.e. information that is not provided to end user station 1 of segment 1 but which is provided to end user station 4 of segment 2 can be provided to end user station 1 from end user station 4. This however relates to one particular implementation. Of course there may be several segments without any communication between the user stations for exchanging information that is not exactly the same in two different segments etc., but wherein different segments receive segment proprietary multimedia content information pushed to them. General for any implementation is that when an end user requests a CDU or any multimedia content, it can be retrieved from the local cache or local storing means in, or associated with, the end user station, PDA, itself, and then presented locally to the end user, whereby the content is selected in a customized manner, at a customized time.

In Fig. 1B end user stations 1, 2, 3 are connected to WLAN segment 1, stations 4, 5 to segment 2 and stations 6, 7 to segment 3. Of course only a few stations are illustrated, and in this figure the local, proprietary push caching means are not explicitly illustrated but they are supposed to be comprised in the end user stations.

According to the invention, since multimedia content, e.g. clips, is already available in the local, proprietary cache of the end user station, which may be mobile or not, handheld or not, then playback can in principle start almost instantly. A traditional cache on the contrary pulls data from a secondary storage when the data is requested by higher level system, e.g. a CPU (Central Processing Unit). The data is then kept in the cache until the space is needed for other data. The underlying assumption behind pull caching is that data that has been used once will be used again in the near future. Pull caching traditionally has been enhanced with pre-fetch where the cache mechanism tries to anticipate what will be requested next, and proceeds to fetch that from the secondary storage. An example thereon relates to surfing on the web when it is more likely that the user follows a link that is visible than one that is not visible.

According to the invention, however, data is instead pushed to the clients. Ideally it is possible to push all available data to the client device or the end user station, so that it would be available instantaneously upon user request. The central server of the inventive system determines what to push to the respective clients for example based on available multimedia content, or data information in general, usage statistics, client reports on cache content and other factors. It should be clear that these only constitute an example on some factors, other factors can also be used to determine what should be pushed. The end user stations then receives data from the server as multicast or broadcast streams.

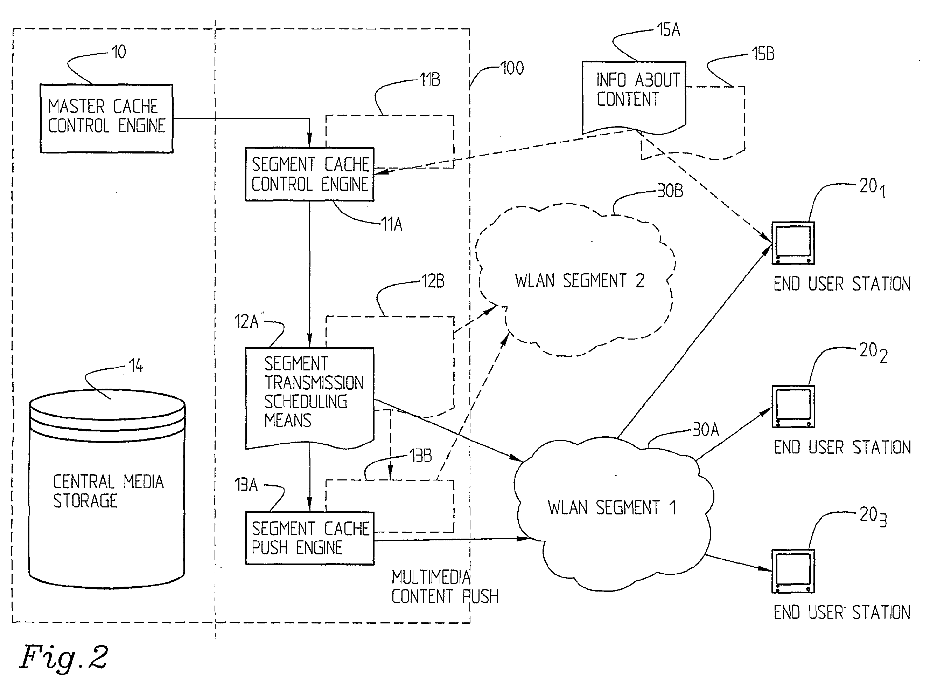

Fig. 2 schematically illustrates a system according to one embodiment of the invention. The emphasis is based on the central server side 100, merely indicating the client side with the end user stations 20₁, 20₂, 20₃. The central server means 100 in this implementation comprises a master cache control engine 10 controlling a number of segment cache control engines 11A, 11B. In this implementation there is one segment cache control engine 11A, 11B for each WLAN segment, WLAN segment 1 30A illustrated as well as a second WLAN segment 2 30B indicated within dashed lines, as well as the segment cache control engine 11B. Segment cache control engine 11A controls WLAN segment 1 30A, whereas the segment cache control engine 11B controls WLAN segment 2 30B. In this implementation there is one segment cache push engine 13A, 13B for each segment. The respective cache push engines transmit multimedia content or data information such as live content, content clips, files, applications etc. using multicast or broadcast to the end user stations of the respective WLAN segments. Thus, in this implementation segment cache push engine 13A pushes multimedia content to end user stations 20₁, 20₂, 20₃. In a similar manner segment cache push engine 13B pushes multimedia content via multicast/broadcast to WLAN segment 2 30B. The respective segment cache control engines 11A, 11B control the respective segment cache push engines 13A, 13B respectively through information from segment transmission scheduling means 12A, 12B. Information about the transmission schedule is also communicated to the end user stations (20₁, 20₂, 20₃) in the respective WLAN segments and, in a particular implementation, also to logically neighbouring segments if for example somewhat different multimedia content is pushed to neighbouring, partly overlapping segments, e.g. if Bluetooth or a similar system is implemented (cf. Fig. 1A).

In another implementation more than one, or several segments share a segment cache push engine.

The master cache control engine 10 in addition to controlling the segment cache control engines, also coordinates the transmissions from the respective segment cache control engines, for example such that a variance detected in one segment can be met proactively in another segment. In addition thereto it coordinates transmission schedules (if intercommunication e.g. according to Bluetooth is implemented) and it also is responsible for handling user segment roaming. It is here supposed that multimedia content is stored in the central media storage 14. This can also of course be seen as a combined entity with the master cache control engine and/or with the segment cache control engines. Of course there may be more than two different segments as well as there may be just one segment; two WLAN segments here being illustrated for illustrative purposes. The pushed content is thus preferably location dependent.

In still another implementation there are not necessarily subordinate and superior control engines provided, but one and the same control engine could be responsible for more than one segment. Also the segment transmission scheduling means could be combined for more than one segment. The main thing is that multimedia content is pushed by multicast or broadcast to end user stations without having been requested for storing locally in the respective end user stations of a given segment. Particularly it is location dependent, but also other criteria could apply. As a user station enters an area, e.g. a cell or anything else, the relevant information can be pushed to it.

The establishment of the transmission schedule is a complex and important function. The general intention is to minimize the delay from a user request until the requested information can be presented, e.g. in one particular implementation to minimize delay from user request until the playback of a clip can start, such that a given number of the clips will start within e.g. 0,5 seconds and all clips will start within e.g. 5 seconds. This is of course only one particular implementation and also the figures are given for examplifying reasons. The transmission scheduling algorithm can take account of different factors depending on localization and situation etc. but for example it should also take other factors into account, such as estimates of available content and content to be produced. It could also be based on factors such as estimates of available content in each end user station or client device in the concerned segment as in a transmission loss model, a client cache-content expiration model, statistics reports from clients and specific requests from clients. It can also be based on factors such as predictions relating to user requests such as a domain model mapping events to requests, statistics reports from clients and historical data.

In one implementation one multicast/broadcast session is used to transmit several clips (for example). Alternatively a new session is opened for each clip. Still further could either a single multicast/broadcast session be used for each parallell distribution channel or alternatively could several multicast/broadcast sessions be used for each parallel distribution channel.

In one implementation two processes in one user station are able to listen to the same multicast/broadcast stream transparently which would make it easier to playback live content and save content clip at the same time. This is however not necessarily the case, but it merely relates to one specific implementation.

If for example Bluetooh or a similar technology is implemented, and if for example a clip is unavailable from the local cache and from the central server means, the client of an end user station could request it from a neighbouring end user station, the client devices e.g. using a Bluetooth connection. The network could for example be set up such that segments overlap geographically and transmit a partially heterogeneous data set to each segment. The client would then be responsible for diffusing the different data further to other clients.

Generally the central server means can be said to, in one particular implementation, comprise a hierarchical dispatching architecture, comprising two different levels. It is supposed that the network is divided into segments, and each segment substantially corresponds to an access point and comprises all end user stations that are able to communicate directly therewith.

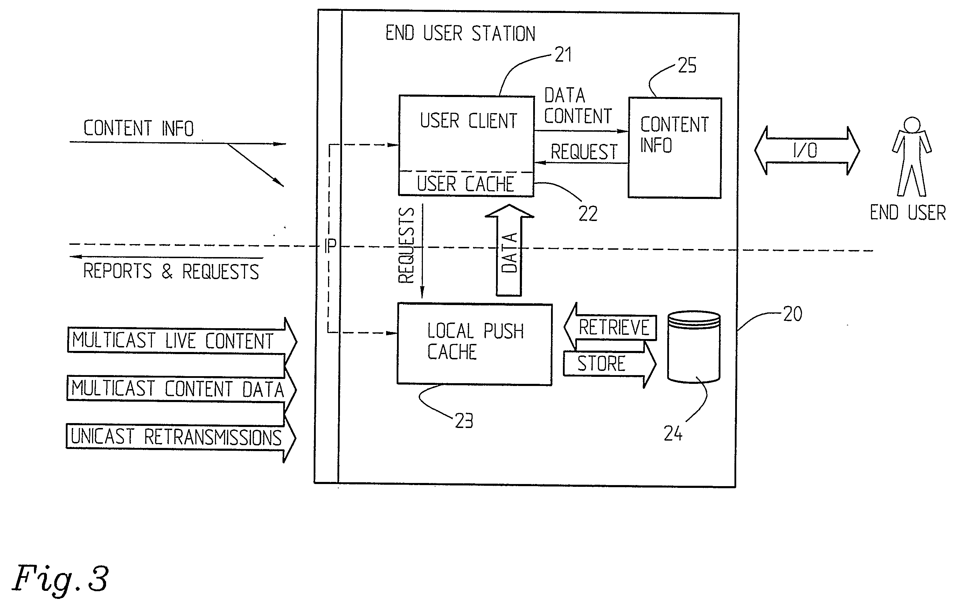

The end user stations receive data from the central server means through multicast or broadcast multimedia content streams or data information streams. In Fig. 3 a block diagram illustrates one embodiment of an end user station 20. In a conventional manner it comprises a user client 21 with a conventional user cache 22. In addition thereto it comprises a local, proprietary, local push cache 23 particularly for push content. In this implementation the actual storage is supposed to be a cache storage whereas the local push cache comprises a local push cache engine, e.g. a proxy. It is supposed that the end user station 20 receives content information from the central server means, cf. Fig. 2, which is stored as content information or presented to the end user e.g. on the display for example as a list 25, and that using said information, the end user enters a request that is provided to the user client, which in turn forwards the request to the local push cache engine 23 which fetches the requested content if available, from the local push cache storing means 24. The cache, may for example contain live content or clips, video, files, web pages etc. To the end user station can for example multicast/broadcast live content be provided, multicast/broadcast content clips, but also unicast retransmissions. In order to assist in the establishment of the scheduling information, reports and requests are provided to the central server means. In one implementation it is supposed that the end user selects a clip from a play-list if the clip is indicated in the content information presentation means 25. In one implementation, for example in the sport arena IT system, the list may be visualized as a time line display. This is however one specific example. The selection made by the end user initiates the user client that makes a call using IP loop-back to the local push cache engine 23. The user client can be any commercial off-the-shelf player as long as it can be set to access content through a local push cache, e.g. implemented as a proxy or the play-list can reference for example clips as coming from a local "server", i.e. the local push cache 23.

If the requested content is available in the local push cache 23, 24, it will be transmitted to the user client in the conventional manner. If the request concerns live content such as for example a live video stream, it will either first be spooled to the push cache storing means 24 (or rather the local push cache 23 if it is implemented as one single component), or the user client will be able to connect separately to the multicast/broadcast live content stream. If however the content, e.g. a clip, is not available in the local push cache, the local push cache engine 23 will look in the transmission schedule (or list) that it receives from the server. If the requested content is scheduled for transmission within for example a given number of seconds, the local push cash engine will wait. Otherwise, i.e. if it is not scheduled for transmission within the given time limit, the local push cache engine will request a retransmission from the central server means. The central server may then deny the request, change the transmission schedule to accommodate the request or send a separate unicast to the end user station.

Some content that is already available in the local push cache will be re-received. The client can use such retransmissions to improve the quality of the content in the local push cache, for example by replacing missing frames or by weighing frames to minimize the perceptual error rate.

Through the present invention it gets possible to distribute multimedia content, files, multicast/broadcast live content or clips on demand to end user stations, also to a huge number of end user stations within a small geographical area who all for example are "watching" one and the same event and where the content is related to the event over wireless carriers to the end user stations.

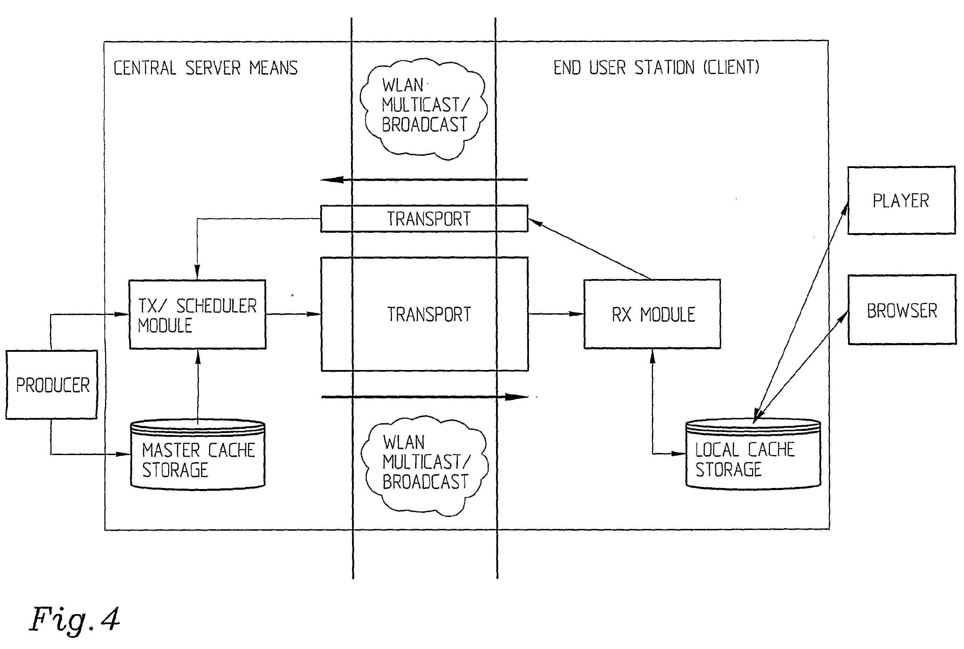

Fig. 4 schematically illustrates block diagram on a functional level of one implementation of the invention, wherein the central server means comprises a transmitter/scheduler module communicating with a master cache storage from where it receives and fetches information, which in turn is provided to both the transmitter/scheduler module and to the master cache storage by some kind of a producer of the multimedia content. Using multicast (or broadcast) information is then pushed over a WLAN (Wireless Local Area Network) to receiving RX module of an end user station which communicates with a local, proprietary push cache in communication with, here, a player and a browser. This implementation actually presupposes that the network problems are negligible and that the local proprietary push cache substantially never overflows. It does also not support HTTP-push.

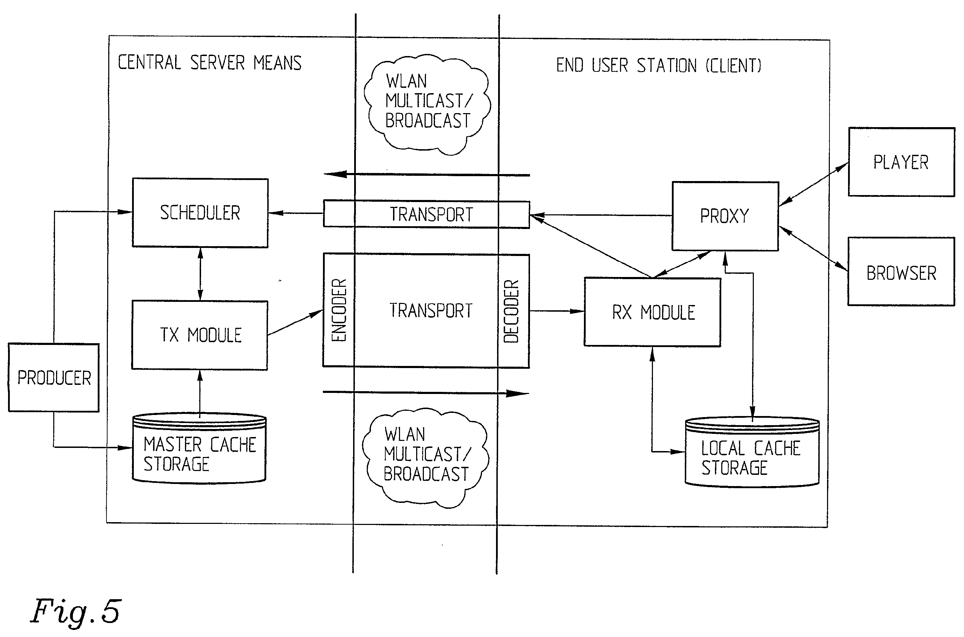

Fig. 5 is a block diagram on a functional level illustrating another implementation of the inventive concept. In this implementation transmission scheduling means communicate with a transmitting module (TX), which here are shown as two separate entities and, like in figure 4, communicating with the master cache storage, the content being provided by some kind of producer. In this implementation it is supposed that an encoder is provided on the central server side, whereas a decoder is provided on the client side. Thus, the end user station comprises a receiving module and a local push cache engine in the form of a proxy communicating with the local (push) cache storage. The proxy communicates with a player and a browser. The scheduling information is transported separately between scheduling means over the WLAN and the proxy and the receiving module, and the transmitting and receiving modules communicate over the WLAN via an encoder and a decoder. The implementation according to Fig. 4 actually requires that the producer constantly is provided with feedback information relating to the available space in the respective local push caches to prevent overflow. If the multimedia content relates to e.g. video, it is supposed that the producer decides what sequences should be picked out for the replay list. The video is encoded using a standard or de facto standard encoder which in turn uses a standard or de facto standard CODEC supported by the targeted end user stations, e.g. PDAs.

A cache data unit (CDU), as referred to earlier, may for example be represented by a CDU description file which may contain a CDU description file name, title text, date and time of the event in the CDU, play length, file name, container format such as for example Windows Media Technologies, Real Media etc. It may also contain CDU comments and other information, or only a part of the above mentioned information.

It is supposed that the central server upon initialization reads initialization parameters containing for example the path to the CDU description files, the path to the CDU files themselves, session parameters etc. The server then checks the parameters and sets up the environment and starts to continuously send the session parameters to a known and established multicast/broadcast group address.

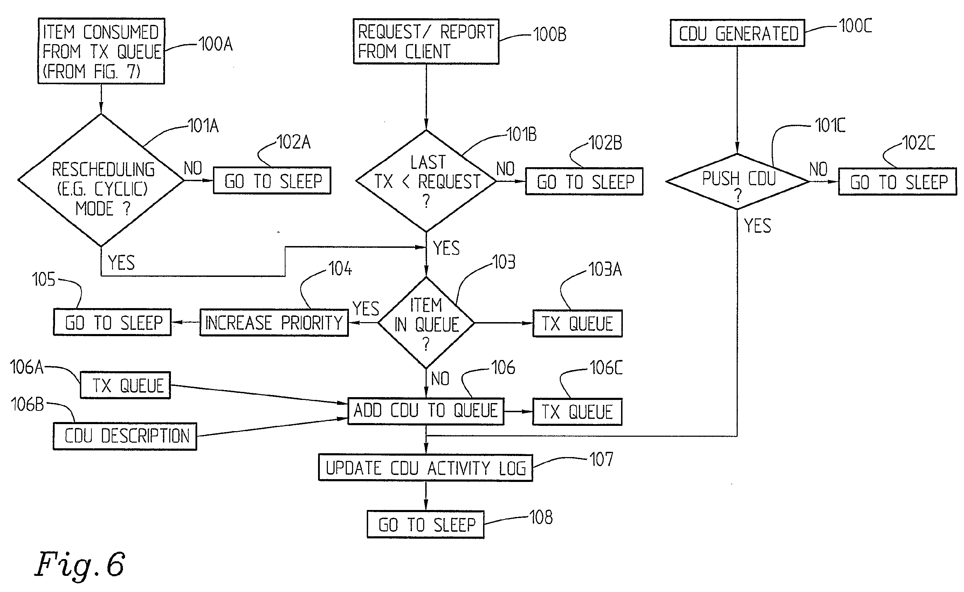

Fig. 6 schematically illustrates one example on a scheduling algorithm. Cyclic retransmission can be used where the CDU is constantly retransmitted to the clients. In very large networks and where the amount of CDUs is relatively small this is a preferred implementation. Alternatively retransmission can be requested when the CDU is sent on request to the clients. Using such an approach, the whole event can be made ready for replay. Block 100A in the figure indicates an item consumed from the TX queue. If the retransmission mode is set to cyclic, 101A, then the CDU description file is put on the transmission queue 103, 103A. Block B in the figure illustrates request/report from the client. The scheduler then checks, 101B, if the incoming request has already been dispatched and if it is a duplicate. If the item is in the queue, 103, the priority will be increased, 104, otherwise the CDU, 106, 106A, 106C, is added to the transmission queue together with a CDU description 106B. This is relevant for requests or reports from the client, item consumed from the TX queue and for generated CDUs (i.e. 100A, 100B, 100C). However, when a new CDU is generated (block 100C), the scheduler will be informed thereon. If push is configured to be used, 101C, the CDU is queued on the transmission queue. If "no" results in steps 101A, 101B and 101C, nothing is done (102A, 102B, 102C). After a CDU has been added to the TX queue, 106, and the activity log has been adapted, 107, the procedure is completed, nothing is done, 108.

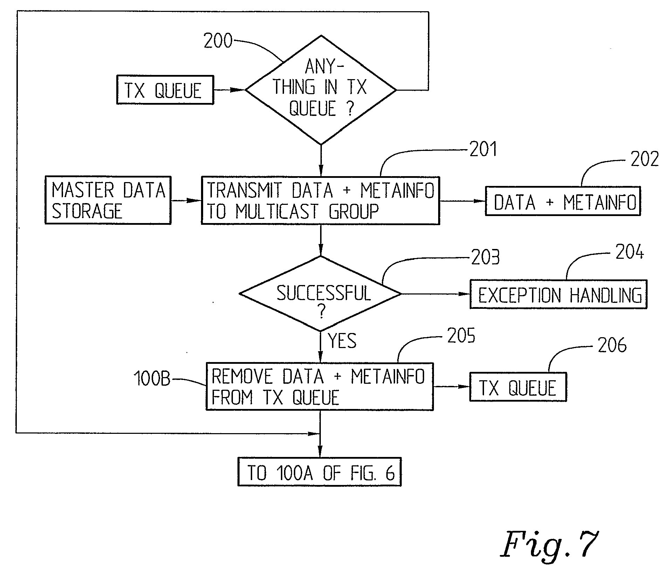

The TX module or transmitting module, simply consumes items from the TX queue, and passes them on to the encoder and to the network. This is more thoroughly illustrated in Fig. 7 giving an example of a TX module procedure. The TX module checks if there is anything in the TX queue, 200. If yes, if there is a clip in the master clip (cache) storage, the clip is together with metainformation (content or scheduling information) transmitted to the established, relevant multicast/broadcast group, 201; 202. If the push multicast/broadcast is successful, 203, the clip and the metainformation is removed from the TX queue, 205. Otherwise the exception is thrown, 204. Then see 100A of Fig. 6.

The CDU description file is sent together with the CDU file to the multicast/broadcast group found or established by means of information in the session parameters. The scheduling means is also notified. The transmission queue is investigated, and the first entry found is transmitted and removed from the queue. If retransmission mode is "cyclic", the entry is added again to the queue (206).

In one implementation data compression is implemented on a wireless network if it has a positive effect. It is not useful on information that already has been compressed. In any case, the benefits of implementing compression should be weighted against the benefits of redundancy.

The encoder, cf. Fig. 7, will accept CDUs from the TX module and transmit them over the network to the client. In one simple implementation, the file is sent as it is. In an alternative advantageous implementation a transmission scheme could be used. Files are then divided into fragments which are redundancy coded and overlapping. Fragments are sent over the network to the decoder. In order to avoid losing too much information from one file, several files can be sent in parallel. The level of redundancy and parallelism can be adjusted adaptively to minimize file losses while keeping latency at an acceptable level. This is to take account of packet loss problems. Which encoding method that is used, depends on the type of file to be transmitted. Data loss or corruption is for example unacceptable in an HTML-file whereas it can be tolerated in a video CDU. Thus, different encoding methods can be used according to different embodiments and also depending on content to be transferred. On the receiving side, i.e. in the end user station, the decoding means will reassemble the fragments and pass them on to the receiving RX module. If the client is in reporting mode, the decoder will include data on the reception quality in the report from the end user station or the client to the central server means.

The inventive concept can be implemented for difference kinds of wireless networks such as wireless LANs, wireless WANS like UMTS (WCDMA), GSM, GPRS etc. One example of a wireless LAN is standardized in IEEE 802.11. Following this standard, all multicast/broadcast traffic is sent using the BSS Basic Rate Set Speed. This is the lowest speed configured in a multi-rate network. Multicast/broadcast may be configured to use the speed the slowest client (end user station) can handle. In another wireless LAN, HIPERLAN/2, multicast/broadcast traffic is sent on a common multicast/broadcast channel at the highest bit rate. The addressing scheme of HIPERLAN/2 would however have to be modified for supporting big networks.

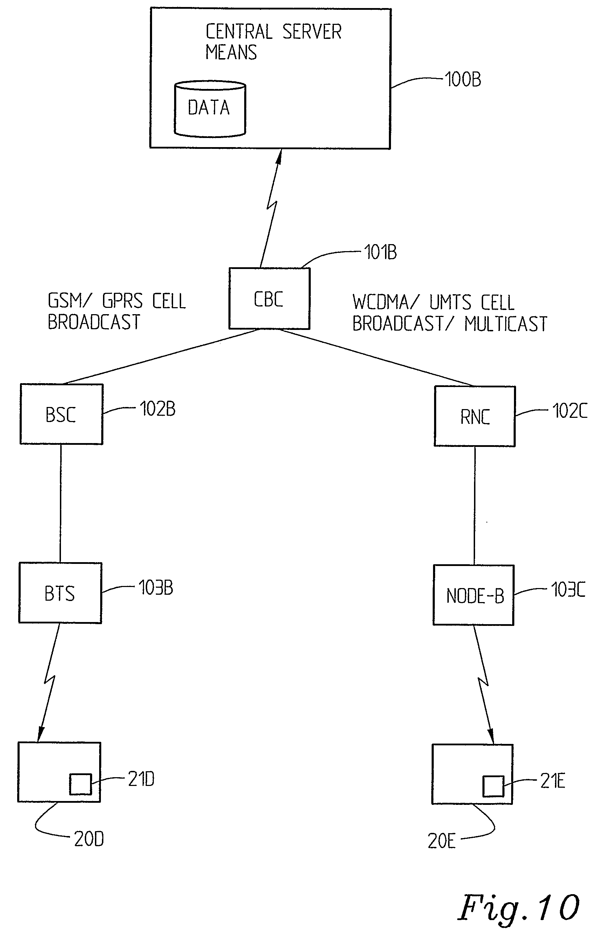

Fig. 10 below will schematically illustrate how the inventive concept could be implemented in WWAN (Wireless Wide Area Networks) such as UMTS, GSM/GPRS etc.

In one implementation, based on IT technology, upon client initialization, the client will start to try to receive session parameters on a common, fixed well-known multicast/broadcast group address. The session parameters comprise information about version, addresses and retransmission mode. Necessary checks and initiations will be performed, and it is possible to change or switch address if the multimedia content is provided on another address. With such an implementation it is possible to reconfigure after initialization and the system is up and running.

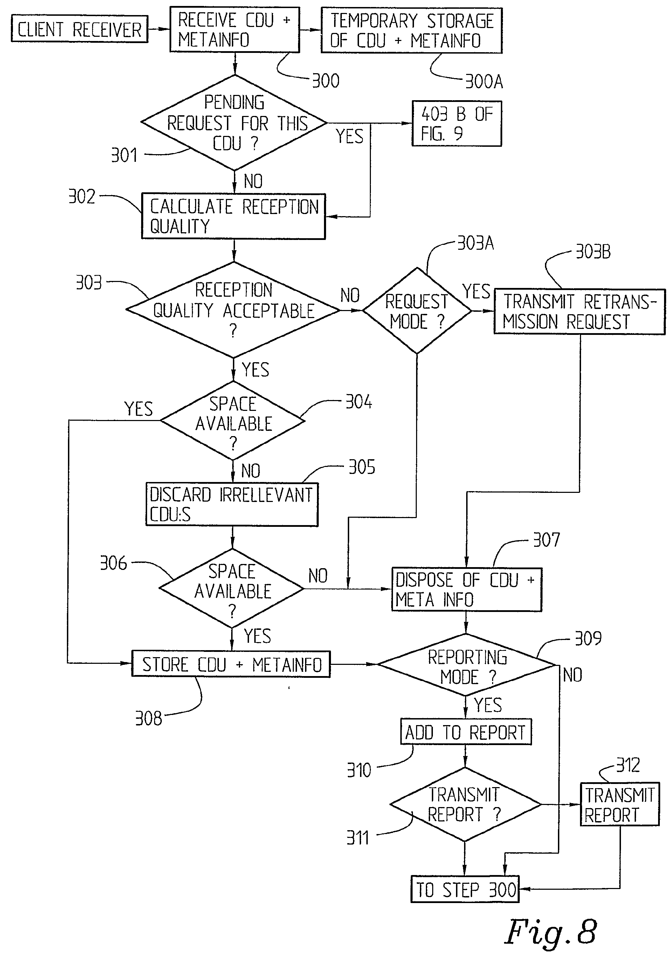

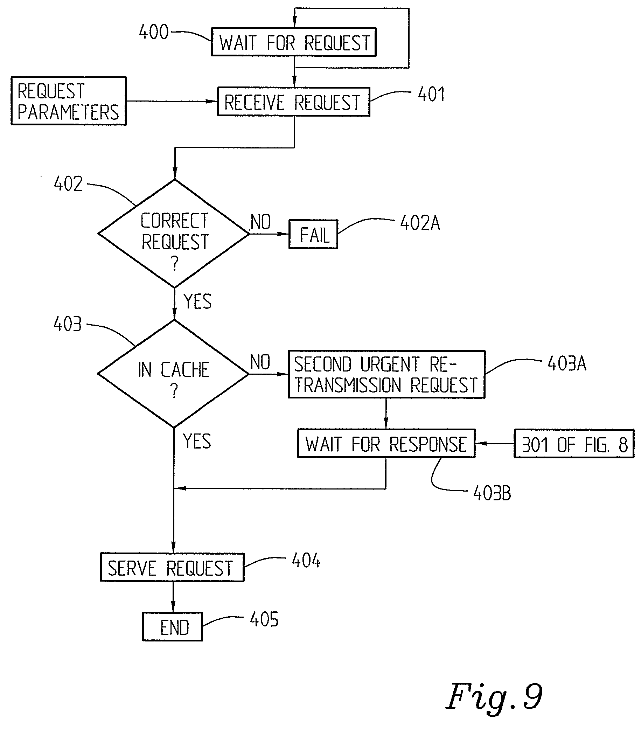

Fig. 8 schematically describes one example on a procedure in the receiving module. The receiving module receives data from the decoder at the transmitting (central server side) (over the client receiver) and it will store the data in the local push cache storing means. If the local push cache already is full, it will attempt to get some free space for the received content and then store it. However, if it is not possible, the received data information, particularly CDU, will be discarded. In Fig. 8 the received content is referred to as CDUs. It is thus in Fig. 8 supposed that the RX module receives a CDU and additional metainfo, wherein the metainformation comprises a content list or similar, 300. It is then possible to temporarily store the CDU and the metainformation, 300A. Subsequently it is examined whether there is a pending request for the particular CDU, 301. If yes, reference is made to 403B of Fig. 9 describing the procedure of a local proxy cache handling means that is implemented for this particular implementation. If not, according to an optional step, it is possible to calculate the reception quality, 302. This may also be done in case there is a pending request for the particular CDU. If the reception quality is acceptable, which is established in an examination step 303, it is proceeded to a step examining whether there is any available space, 304. If the reception quality is established not be acceptable, it is examined whether the RX module is in a request mode, 303A. If yes, a retransmission request may be sent, 303C. If it is not in a request mode (303A), but also if a retransmission is requested, the received CDU and the metainformation is scrapped, 307. In step 304 examining if there is any space available, the result may be that there is no space. Then a cleaning up step 305 is performed to for example dispose of no more relevant content, whereupon it is again examined if there is any space available, 306. If not, it is proceeded with step 307 as referred to above wherein the CDU and the metainformation is disposed of. If it however was established that there now is space available, the CDU and the metainfo is stored into the proprietary, local push cache, 308. Both if the CDU and the metainformation is stored or if it is disposed of, it may be proceeded with a reporting mode, 309 or it may be examined if a reporting should be done. If yes, information about the outcome is added to a report, 310, which may be transmitted or not, 311, 312. If not, i.e. if no reporting mode is implemented, or after transmitting a report, or if an indication is received that the report should not be transmitted, it is returned to step 300 above, i.e. awaiting reception of a new CDU etc.

It should be clear that, as an alternative to steps 301 etc. above relating to discarding of CDU and metainformation if the quality is not sufficient, it is possible to store the CDU (and possible metainformation) with an inferior quality into a storing means, and add it to a subsequent transmission of a corresponding content such that for example two half clips can be added, as a quality increasing method. Also other implementations are possible.

In this implementation it is referred to implementation of a proxy with a proxy handler. It is however not necessary to implement a proxy. However, if there is a possibility that the cache will overflow, it will be necessary or at least advantageous to use a proxy to deal with requests which cannot be fulfilled from the cache. This is examplified in Fig. 9 describing the local proxy cache handler. As referred to above it is supposed that the local proxy cache handler is an awaiting stage for reception of a request, 400. Since supposed that the request is received, 401, with reception of request parameters. Then it is examined if the request is correct, 402. If not, it indicates a failure, 402A. If the request however is established to be correct, it is examined whether the request is for content already in the cache, 403. If not, then advantageously an urgent retransmission request is sent, 403A, whereupon it is awaited a response, 403B, cf. step 301 of Fig. 8. If it is established however that the content is already in the cache or when waiting for a response, 403B, the request is served, 404, whereupon the procedure is finished for that request, 405.

If a local proxy server is implemented, the CDU can be accessed through an IP loop-back instead of directly from the file system. This provides a higher degree of controllability, but on the other hand, the overhead will be somewhat higher.

A local proxy server is advantageous in that player transparency will be provided. However, irrespectively of whether an implementation is used which includes a proxy or not, application transparency will be provided for.

In a somewhat simplified implementation, the user may access a CDU index HTML page, which is stored locally, where the links to the locally stored CDUs are using an ordinary Internet Browser, for example Microsoft Internet Explorer, Netscape Communicator or similar. The browser will then pick the correct video player (in case of video) according to the file extension and play the file locally. Such an implementation, however, does not support HTTP-push of content. Generally, with or without a proxy being implemented, application transparency is provided.

It should be clear that, throughout the application, when referring to an end user station, it could refer to a PDA, a mobile phone, a mobile terminal in general or to any other wireless equipment.

Moreover, even if it mainly has been referred to WLANs, the concept also covers implementation in wireless WANs, cf. Fig. 10, such as GSM/GPRS, UMTS etc. Fig. 10 intends to illustrate the implementation both to GSM/GPRS (left part of the figure) and to UMTS (right part of the figure).

Multicast/broadcast is a technique that does not exist in GSM or UMTS today but broadcast does. The CBS (Cell Broadcasting Services) is today used to inform the User Equipment (UE) (i.e. end user station) about general cell information, like what channels should be used etc.

3GPP has just initiated standardization of multicast/broadcast in 3G networks. It is called MBMS (Multicast/Broadcast Multimedia Services). This service will support higher bit rates than CBS.

For Cell Broadcast Services in GSM, the Caching CBE (Cell Broadcast Entity) of the central server means, 100B, with a Push Cache Manager sends 82 octets of the data (CDU etc) in a "WRITE-REPLACE"-request to the CBC (Cell Broadcast Centre), 101A, located in the Core Network. The CBC, 101B, adds a CBS header and transmits to the BSC (Base Station Controller), 102B, which adds a 6 octet header and forms messages of 88 octets each. The message is transmitted to the BTS (Base Transceiver Station), 103B, or RBS (Radio Base Station), which splits the 88 octets into four 22 octet pieces and sends them on the air (400 bps) to the UE (User Equipment), 20D. The UE assembles the packages and hands them over to the Push Cache Client, 21D.

For Cell Broadcast Services in WCDMA (UMTS), the Caching CBE (Cell Broadcast Entity) of the central server means, 100B, with a Push Cache Manager (server), sends 82 octets to the data (CDU etc.) in a "WRITE-REPLACE"-request to the CBC (Cell Broadcast Centre), 101B, located in the Core Network. The CBC, 101B, adds a CBS header and transmits to the RNC (Radio Network Controller), 102C, which adds a 6 octet header and forms messages of 88 octets each. The message is transmitted through the Node-B, 103C, and sent on the air (20 kbps) to the UE (User Equipment), 20E. The UE, 20E, assembles the packages and hands it over to the Push Cache Client, 21E.

Generally it will not be possible to solve the problems initially referred to in a conventional manner when there are about 50 or more end user stations gathered in a so called hotspot. Implementing the inventive concept will however be advantageous also for fewer end users and there are also other aspects, such that if for example an end user enters a hospital, any public complex, university, any railway station etc. the relevant content could be automatically pushed to the user which, could be presented with it quickly on request irrespectively of whether there are many other end users together at the same spot connected on the same wireless LAN.

In a particular implementation feedback relating to reception and content of the local push cache does not have to be provided from all clients in a segment. Reporting could be delegated to only some specified clients based on some allocation algorithm such as weighted Round-Robin or similar. In a particular implementation the central server means distributes server cache content lists to the clients.

Particularly a basic Forward Error Correction (FEC) scheme is used comprising cyclic retransmission of CDUs. Generally the server comprises scheduling of cache contents both for cyclic retransmissions and for client request retransmissions. Forward Error Correction (FEC) used to the multicast/broadcast is generally needed in order to minimize client traffic, e.g. to avoid acknowledgement implosion. As an alternative to a standard player a local streaming server can be implemented.

One way of implementing a reliable multicast/broadcast method is to send each packet twice, or even thrice, and also to interleave packets from all CDUs in the cache content list. In one implementation open source implementation of a HTTP server can be used as a local push cache. The invention is of course not limited to any particular HTTP or streaming servers/proxys.

Generally the transmission queues are managed as tree queues, a cache contents list queue, request transmission queue and a cyclic retransmission queue, cf. Fig. 6.

According to the invention the client traffic should be minimized as much as possible. In one implementation clients listen to other requests on a multicast/broadcast channel and send only unique requests. Acknowledgement of what will soon be sent from the central server will also decrease a number of client requests. Without cache content lists or similar it is generally not possible to do any prioritizing in the local push cache. One way of solving this problem could be via pending metadata at the end of the CDU and include the files in each packet, which relates to a most advantageous implementation.

One particular implementation of the invention relates to offer reruns and video etc. on demand to a PDA over an IP network at for example a sports arena or similar having thousands of spectators many of which having Personal Digital Assistants. To provide individual data information such as audio/video information to the videos, multicast/broadcast streamed live content (audio/video) or content clips can be pushed to the end user stations. The receiving end user station may or may not show the received content, but it always saves it in the local push cache or tunes in to a multicast/broadcast address. To preserve memory it is possible to letting an audio/video producer signal, on the multicasting/broadcasting stream, to the end user station when interesting events have occurred. The local push cache in the receiving end user station keeps only the last n seconds, n being a customizable number of seconds before, and another m seconds after the event which (m) also is customizable. The signal, from the video producer (or similar) starts a process that will initiate storing in the cache for later use. It also stores the next m seconds in the cache, so that the end user can enjoy n + m seconds before and after the event. During the process an index page can be updated to support later rerun retrieval. This way of preserving memory is efficient when a memory, which is large, at the receiving end can hold both a cache and the stored content (audio/video) and when it is essential that the reruns are sent quickly after the event.

Another way of preserving storing capability or memory is by having an (audio/video) producer record the event locally, maybe edit it and IP multicast/broadcast the streamed reruns to the receiving end user stations. All the receiving end user stations store it locally in the background and update an index for rerun retrieval later by the user. The rerun clips are e.g. 5 to 20 seconds long or whatever is needed to reflect the event properly. This method is efficient when the memory is of medium size, and can hold both the stored content (audio/video) and when the time to play the rerun is not critical.

Alternatively, a producer may perform recording locally, may be edit it, and only IP multicast/broadcast streamed reruns to the receiving devices on different IP multicast/broadcast addresses for each clip. All the received end user stations in the receive an index describing the clips with links to the appropriate multicast/broadcast address. The rerun clips are for example 5 to 20 seconds in length and are sent cyclically every 5 to 20 seconds on a specific IP multicast/broadcast address. This method is advantageous when the memory at the receiving end user station is small and can not hold any content (audio/video) clips.

To increase quality, diversity can be implemented as referred to above by duplicating or triplicating video transmissions. The second time a rerun is sent, for example every bit, frame or packet can be combined with the earlier sent sequence, and errors can be discarded. The combining can be soft, meaning that the mean of the combined sequences is used, or it can be hard, meaning that a majority decision is used per packet or block size.

Clips or CDUs can be retransmitted continuously to the end user stations in such a way that an optimization is achieved for each segment, whereas segment as referred above relate to those end user stations which share a common radio carrier frequency and access point. It is also possible to continuously retransmit each clip such that the time to wait for a clip will be limited.

Still further each end user stations could be presented with a list from which it is possible to select multimedia clip (or live content). The system may analyze the current network load and produce a rerun multimedia consisting of n seconds before and m seconds after the event, n + m being bounded upwards by the current system load, i.e. taking network load situation into consideration. The n and m figures are limited downwards by the necessity to provide an understandable and meaningful multimedia content presentation.

A particular implementation provides for streamed reruns or IP multicast/broadcast to receiving end user stations on different IP multicast/broadcast addresses for each clip of a number of clips whereas the receiving end user stations also have received an index describing the clips with links to the appropriate multicast/broadcast addresses.

It is also possible to simply tag or provide the CDUs or multimedia content pieces with an identification instead of a separate list.

In particular implementations a solution is provided through which delays in a video producer in action time can be adjusted for, relating to when important events are signaled or similar. In one implementation the runtime of e.g. a video clip can be made much larger than the measured or variable reaction time. Alternatively the runtime of for example a video clip can be made much larger than a fixed maximum reaction time. Alternatively justification of the clip sizes can be done afterwards in a later iteration. Events or similar to be presented can be automatically sensed and signalled. Alternatively manual indication can be implemented for sending signals relating to content that should be made available to end user stations within a segment.

It should be clear that the invention, of course, not is limited to the specifically illustrated embodiments, but that it can be varied in a number ways without departing from the scope of the appended claims.

## Claims

1. A system for communication of data information, e.g. multimedia content, over a wireless network connecting a plurality of end user stations and supporting broadcast/multicast transmission,
**characterized in**
**that** it comprises central server means with at least one central cache arrangement for storing at least selected parts of data information relevant for at least a segment of the wireless network, transmission scheduling means for transmission scheduling, central cache arrangement control means for, by using scheduling information, controlling a central cache arrangement push engine for multicast/broadcast pushing of information to end user stations within said at least one segment of the wireless network, and in that the end user stations comprise or are associated with proprietary, local push content caching means for holding the pushed data information, and in that upon request by the respective end user, selected data information may be presented to the end user in a customized manner via a user client from said local caching means.

2. A system according to claim 1,
**characterized in**
**that** a segment of the network corresponds to a local part of the wireless network.

3. A system according to claim 2,
**characterized in**
**that** a segment corresponds to a local part of the network with at least temporarily a large or huge amount of connected end user stations, a hot spot, comprising a sports arena, a public place for spectacular events or any other localization with a large number of simultaneously connected end user stations.

4. A system according to claim 2 or 3,
**characterized in**
**that** partly overlapping network segments are implemented.

5. A system according to claim 2, 3 or 4,
**characterized in**
**that** the pushed data information content is segment dependent, i.e. different for each segment at least to a major part.

6. A system at least according to claim 3 or 4,
**characterized in**
**that** at least partly the same content is pushed to more than one segment of the wireless network.

7. A system according to any one of the preceding claims,
**characterized in**
**that** the end user station client is allocated a segment at connecting to the system and entering an area corresponding to the segment or at establishment of an end user usage pattern.

8. A system according to any one of the preceding claims,
**characterized in**
**that** the data information comprises multimedia information, clips or live, video/audio, web pages, files, applications.

9. A system according to claim 8,
**characterized in**
**that** one multicast/broadcast session is used to transmit several multimedia/video clips/web pages.

10. A system according to claim 8,
**characterized in**
**that** a new multicast/broadcast session is opened for each multimedia content, clip/web (page) or file transmission.

11. A system according to any one of the preceding claims,
**characterized in**
**that** a single multicast/broadcast session or several multicast/broadcast sessions are used for each parallell distribution channel.

12. A system according to any one of the preceding claims,
**characterized in**
**that** the central cache arrangement push engine is responsible for pushing data information content to end user stations of more than one segment.

13. A system according to any one o the preceding claims,
**characterized in**
**that** there is one central cache arrangement control means and one push engine for each segment.

14. A system according to any one of the preceding claims,
**characterized in**
**that** content information, comprising lists from the transmission scheduling means is communicated to the end user stations within the concerned segment allowing the end user to select data information for requests, or that the multimedia content is tagged.

15. A system according to anyone of the preceding claims,
**characterized in**
**that** the central cache arrangement comprises a number of subordinate cache control engines, and a superior master cache control engine controlling said subordinate cache control engines, and coordinating transmissions and handling end user station segment roaming.

16. A system according to any one of the preceding claims,
**characterized in**
**that** the transmission scheduling means uses an algorithm comprising information about estimated/predicted content and end user demand for minimizing the delay between end user request and end user presentation.

17. A system according to anyone of the preceding claims,
**characterized in**
**that** end user inter-communication is enabled for transfer of information from one end user station of a segment to another end user station of another, partly overlapping segment, when partly different information data is provided to the partly overlapping segments (Bluetooth).

18. A system according to any one of the preceding claims,
**characterized in**
**that** for end user requests of live, video or streaming information, the end user station client can connect separately to the live multicast/broadcast stream without having the content passing the local cache.

19. A system according to any one of the preceding claims,
**characterized in**
**that** retransmission of content from the central server can be requested, and in that a time limit is given such that if transmission of the content is due with the time interval, no retransmission is requested from the cache engine.

20. A system according to any one of the preceding claims,
**characterized in**
**that** the wireless network is IP-based, WLAN, HIPERLAN 2,3,4, IEEE 802.11, UMTS, GSM/GPRS, EDGE, PDC, CDMA, WCDMA, CDMA 2000, hybrid networks with DVB and a back channel, the push content local caches particularly comprising proxy servers.

21. An end user station in a wireless network supporting communication of data information, e.g. multimedia content, **characterized in**
**that** it comprises or is associated with a proprietary, local push content caching means for holding data information pushed via multicast/broadcast to the end user station by a central server means controlling data information pushing to at least a segment of the wireless network in which the end user station is connected/located, and in that upon request, selected, customized data information can be fetched from the local push content caching means to the client of the end user station.

22. An end user station according to claim 21,
**characterized in**
**that** it comprises means for receiving information about information pushed, or to be pushed, to the end user station, such that the end user can base requests on said information to select the desired content to be presented at a desired time.

23. An end user station according to claim 21 or 22,
**characterized in**
**that** the proprietary push content cache comprises a proxy.

24. An end user station according to any one of claims 21-23,
**characterized in**
**that** the data information comprises multimedia content, comprising live video, video clips, web pages, audio, HTML, GIF, JPEG files, applications, sensor data.

25. An end user station according to any one of claims 21-24,
**characterized in**
**that** it comprises a PDA, a mobile phone, a mobile terminal or any other wireless equipment.

26. A method for, in a wireless network, communicating data information, e.g. multimedia content, to end user stations,
**characterized in**
**that** it comprises the steps of:
- storing at least selected parts of data information relevant for the end user stations of at least one segment of the wireless network in a central storing/cache arrangement of a central server means;
- performing a transmission scheduling procedure to provide scheduling information;
- using said scheduling information for controlling multicast/broadcast pushing of the relevant data information to the end user stations of the at least one segment;
- providing content information, to the end user stations;
- storing, in local, proprietary push content caching means of the respective end user stations, the pushed data information,
such that each of said end user station optionally, in a customized manner, can request and access data information such as multimedia content from its local, proprietary push content caching means.

## Patentansprüche

1. System zur Übermittlung von Dateninformationen, z. B. Multimediainhalten, über ein Funknetz, das eine Vielzahl von Endbenutzerstationen verbindet und wenigstens Broadcast/Multicast-Übertragung unterstützt,
**dadurch gekennzeichnet,**
**dass** es ein Zentralservermittel mit wenigstens einer zentralen Cache-Anordnung zum Speichern wenigstens ausgewählter Teile von Dateninformationen, die für wenigstens ein Segment des Funknetzes relevant sind, ein Übertragungszeitplanungsmittel zur Übertragungszeitplanung, ein Zentral-Cache-Anordnungssteuermittel zum Steuern einer Zentral-Cache-Anordnungs-Push-Engine für das Pushen von Multicast/Broadcast-Informationen an Endbenutzerstationen durch das wenigstens eine Segment des Funknetzes unter Verwendung von Zeitplanungsinformationen umfasst, und dass die Endbenutzerstationen ein proprietäres lokales Push-Inhalt-Cache-Mittel zum Halten der gepushten Dateninformationen umfassen oder diesem zugeordnet sind, und dass dem Endbenutzer auf Anforderung durch den jeweiligen Endbenutzer ausgewählte Dateninformationen auf angepasste Weise über einen Benutzer-Client von dem lokalen Cache-Mittel präsentiert werden können.

2. System nach Anspruch 1,
**dadurch gekennzeichnet,**
**dass** ein Segment des Netzes einem lokalen Teil des Funknetzes entspricht.

3. System nach Anspruch 2,
**dadurch gekennzeichnet**
**dass** ein Segment einem lokalen Teil des Netzes mit einer wenigstens vorübergehenden großen oder riesigen Menge an verbundenen Endbenutzerstationen, einem Hot-Spot, umfassend ein Sportstadion, einem öffentlichen Ort für spektakuläre Veranstaltungen oder einem beliebigen anderen Standort mit einer großen Anzahl gleichzeitig verbundener Endbenutzerstationen entspricht.

4. System nach Anspruch 2 oder 3,
**dadurch gekennzeichnet,**
**dass** teilweise überlappende Netzsegmente implementiert sind.

5. System nach Anspruch 2, 3 oder 4,
**dadurch gekennzeichnet,**
**dass** der gepushte Dateninformationsinhalt segmentabhängig ist, d. h. wenigstens zum Großteil für jedes Segment unterschiedlich ist.

6. System wenigstens nach Anspruch 3 oder 4,
**dadurch gekennzeichnet,**
**dass** wenigstens teilweise derselbe Inhalt an mehr als ein Segment des Funknetzes gepusht wird.

7. System nach einem der vorangehenden Ansprüche,
**dadurch gekennzeichnet,**
**dass** dem Endbenutzerstations-Client bei Verbindung mit dem System und Betreten eines Bereichs, der dem Segment entspricht, oder bei Herstellung eines Endbenutzernutzungsmusters ein Segment zugewiesen wird.

8. System nach einem der vorangehenden Ansprüche,
**dadurch gekennzeichnet,**
**dass** die Dateninformationen Multimedia-Informationen, Clips oder Liveübertragung, Video/Audio, Webseiten, Dateien, Anwendungen umfassen.

9. System nach Anspruch 8,
**dadurch gekennzeichnet,**
**dass** eine Multicast/Broadcast-Sitzung benutzt wird, um mehrere Multimedia/Videoclips/Webseiten zu übertragen.

10. System nach Anspruch 8,
**dadurch gekennzeichnet,**
**dass** eine neue Multicast/Broadcast-Sitzung für jeden Multimedia-Inhalt, jeden Clip/Web(seite) oder jede Dateiübertragung eröffnet wird.

11. System nach einem der vorangehenden Ansprüche,
**dadurch gekennzeichnet,**
**dass** eine einzelne Multicast/Broadcast-Sitzung oder mehrere Multicast/Broadcast-Sitzungen für jeden parallelen Verteilungskanal benutzt werden.

12. System nach einem der vorangehenden Ansprüche,
**dadurch gekennzeichnet,**
**dass** die Zentral-Cache-Anordnungs-Push-Engine zum Pushen von Dateninformationsinhalt an Endbenutzerstationen von mehr als einem Segment zuständig ist.

13. System nach einem der vorangehenden Ansprüche,
**dadurch gekennzeichnet,**
**dass** ein Zentral-Cache-Anordnungssteuermittel und eine Push-Engine für jedes Segment vorliegen.

14. System nach einem der vorangehenden Ansprüche,
**dadurch gekennzeichnet,**
**dass** Inhaltsinformationen, die Listen von dem Übertragungszeitplanungsmittel umfassen, an die Endbenutzerstationen in dem betroffenen Segment übermittelt werden, so dass der Endbenutzer Dateninformationen für Anforderungen auswählen kann, oder dass der Multimedia-Inhalt mit Tags versehen ist.

15. System nach einem der vorangehenden Ansprüche,
**dadurch gekennzeichnet,**
**dass** die Zentral-Cache-Anordnung eine Anzahl untergeordneter Cache-Steuervorrichtungen und eine übergeordnete Haupt-Cache-SteuerVorrichtung umfasst, die die untergeordneten Cache-Steuervorrichtungen steuert und Übertragungen und Handhabung von Endbenutzerstation-Segment-Roaming koordiniert.

16. System nach einem der vorangehenden Ansprüche,
**dadurch gekennzeichnet,**
**dass** das Übertragungszeitplanungsmittel einen Algorithmus benutzt, der Informationen zu geschätztem/vorhergesagtem Inhalt und Endbenutzernachfrage umfasst, um die Verzögerung zwischen Endbenutzeranforderung und Präsentation an den Endbenutzer zu minimieren.

17. System nach einem der vorangehenden Ansprüche,
**dadurch gekennzeichnet**,
Kommunikation zwischen Endbenutzer zur Übertragung von Informationen von einer Endbenutzerstation eines Segments an eine andere Endbenutzerstation eines anderen, teilweise überlappenden Segments aktiviert wird, wenn teilweise unterschiedliche Informationsdaten an die teilweise überlappenden Segmente bereitgestellt werden (Bluetooth).

18. System nach einem der vorangehenden Ansprüche,
**dadurch gekennzeichnet,**
**dass** sich der Endbenutzerstation-Client für Endbenutzeranforderungen von Liveübertragungs-, Video- oder Streaming-Informationen separat mit dem Live-Multicast/Broadcast-Stream verbinden kann, ohne dass der Inhalt den lokalen Cache durchlaufen muss.

19. System nach einem der vorangehenden Ansprüche,
**dadurch gekennzeichnet,**
**dass** die Wiederübertragung von Inhalt von dem zentralen Server angefordert werden kann und dass eine Zeitbegrenzung erteilt wird, derart, dass, wenn die Übertragung des Inhalts innerhalb eines Zeitintervalls fällig ist, keine Wiederübertragung von der Cache-Vorrichtung angefordert wird.

20. System nach einem der vorangehenden Ansprüche,
**dadurch gekennzeichnet,**
**dass** es sich bei dem Funknetz um IP-basierte WLAN-, HIPERLAN 2,3,4-, IEEE 802.11-, UMTS-, GSM/GPRS-, EDGE-, PDC-, CDMA-, WCDMA-, CDMA 2000- Hybridnetze mit DVB und Rückkanal handelt, wobei die lokalen Push-Inhalt-Caches insbesondere Proxyserver umfassen.

21. Endbenutzerstation in einem Funknetz, das Übermittlung von Dateninformationen, z. B. Multimediainhalt, unterstützt,
**dadurch gekennzeichnet,**
**dass** sie ein proprietäres, lokales Push-Inhalt-Cache-Mittel umfasst oder diesem zugeordnet ist, das zum Halten von Dateninformationen dient, die durch ein Zentralservermittel, das das Pushen von Dateninformationen an wenigstens ein Segment des Funknetzes steuert, indem die Endbenutzerstation verbunden/angeordnet ist, über Multicast/Broadcast an die Endbenutzerstation gepusht werden, und dass auf Anforderung ausgewählte, angepasste Dateninformationen von dem lokalen Push-Inhalt-Cache-Mittel an den Client der Endbenutzerstation abgerufen werden können.

22. Endbenutzerstation nach Anspruch 21,
**dadurch gekennzeichnet,**
**dass** sie Mittel zum Empfangen von Informationen über Informationen umfasst, die an die Endbenutzerstation gepusht werden oder gepusht werden sollen, derart, dass der Endbenutzer Anforderungen auf Grundlage der Informationen tätigen kann, um den gewünschten Inhalt zur Präsentation an einem gewünschten Zeitpunkt auszuwählen.

23. Endbenutzerstation nach Anspruch 21 oder 22,
**dadurch gekennzeichnet,**
**dass** der proprietäre Push-Inhalt-Cache einen Proxy umfasst.

24. Endbenutzerstation nach einem der Ansprüche 21-23,
**dadurch gekennzeichnet,**
**dass** die Dateninformationen Multimedia-Inhalt umfassen, der Live-Video, Videoclips, Webseiten, Audio, HTML, GIF, JPEG-Dateien, Anwendungen, Sensordaten umfasst.

25. Endbenutzerstation nach einem der Ansprüche 21-24,
**dadurch gekennzeichnet,**
**dass** sie ein PDA, ein Mobiltelefon, ein mobiles Endgerät oder beliebige andere drahtlose Ausrüstung umfasst.

26. Verfahren zum Übermitteln von Dateninformationen, z. B. Multimediainhalten an Endbenutzerstationen in einem Funknetz,
**dadurch gekennzeichnet, dass**
es die folgenden Schritte umfasst:
- Speichern von wenigstens ausgewählten Teilen von Dateninformationen, die für die Endbenutzerstationen von wenigstens einem Segment des Funknetzes relevant sind, in einer zentralen Speicher-/Cache-Anordnung eines Zentralspeichermittels;
- Durchführen eines Übertragungszeitplanungsvorgangs zum Bereitstellen von Zeitplanungsinformationen;
- Benutzen der Zeitplanungsinformationen zum Steuern des Multicast/Broadcast-Pushens von relevant Dateninformationen an die Endbenutzerstationen des wenigstens einen Segments;
- Bereitstellen von Inhaltsinformationen an die Endbenutzerstationen;
- Speichern der gepushten Dateninformationen in einem lokalen proprietären Push-Inhalt-Cache-Mittel der jeweiligen Endbenutzerstationen, derart, dass jede der Endbenutzerstation wahlweise auf angepasste Weise Dateninformationen wie etwa Multimedia-Inhalt von seinem lokalen proprietären Push-Inhalt-Cache-Mittel anfordern und darauf zugreifen kann.

## Revendications

1. Système de communication d'informations de données, par ex., un contenu multimédia, sur un réseau sans fil connectant une pluralité de postes d'utilisateur final et compatibles avec une transmission de diffusion générale/multidiffusion,
**caractérisé en ce qu'**il
comprend un moyen de serveur central avec au moins un agencement de cache centrale pour le stockage au moins de parties choisies des informations de données pertinentes pour au moins un segment du réseau sans fil, des moyens de planification de la transmission pour la planification de la transmission, des moyens de contrôle de l'agencement de cache centrale pour, en utilisant des informations de planification, contrôler un moteur de poussée de l'agencement de cache centrale pour la poussée des informations en diffusion générale/multidiffusion vers des postes d'utilisateurs finaux à l'intérieur dudit au moins un segment du réseau sans fil, et **en ce que** les postes d'utilisateurs finaux sont composées de ou sont associées à des moyens de captage de contenu de poussée locaux pour maintenir les informations de données poussées, et **en ce que** sur demande de l'utilisateur final respectif, des informations de données choisies peuvent être présentées à l'utilisateur final de façon personnalisée à travers un client utilisateur à partir desdits moyens de captage locaux.

2. Système selon la revendication 1,
**caractérisé en ce**
**qu'**un segment du réseau correspond à une partie locale du réseau sans fil.

3. Système selon la revendication 2,
**caractérisé en ce**
**qu'**un segment correspond à une partie locale du réseau avec au moins temporairement un grand nombre ou un nombre énorme de postes d'utilisateurs finaux connectés, un hot spot, comprenant un centre de sports, une place publique pour des événements spectaculaires et un quelconque emplacement avec un grand nombre de postes d'utilisateurs finaux connectés simultanément.

4. Système selon la revendication 2 ou la revendication 3,
**caractérisé en ce que**
des segments de réseau se chevauchant partiellement sont implémentés.

5. Système selon la revendication 2, la revendication 3 ou
la revendication 4,
**caractérisé en ce que**
le contenu des informations de données poussées est dépendant du segment, c.-à-d., différent pour chaque segment au moins pour une majeure partie.

6. Système au moins selon la revendication 3 ou la revendication 4,
**caractérisé en ce**
**qu'**au moins partiellement le même contenu est poussé vers plusieurs segments du réseau sans fil.

7. Système selon l'une quelconque des revendications précédentes,
**caractérisé en ce**
**que** le client du poste de l'utilisateur final est alloué un segment lors de la connexion au système et à l'entrée dans une zone correspondant au segment ou à l'établissement d'un schéma d'utilisation de l'utilisateur final.

8. Système selon l'une quelconque des revendications précédentes,
**caractérisé en ce**
**que** les informations de données comprennent des informations multimédia, des clips ou du direct, la vidéo/l'audio, des pages Web, des fichiers, des applications.

9. Système selon la revendication 8,
**caractérisé en ce**
**qu'**une session de multidiffusion/diffusion générale est utilisée pour transmettre plusieurs multimédias/clips vidéo/pages Web.

10. Système selon la revendication 8,
**caractérisé en ce**
**qu'**une nouvelle session de multidiffusion/diffusion générale est ouverte pour chaque contenu multimédia, clip/page Web de transmission de fichiers.

11. Système selon l'une quelconque des revendications précédentes,
**caractérisé en ce**
**qu'**une session de multidiffusion/diffusion générale ou plusieurs sessions de multidiffusion/diffusion générale sont utilisées pour chaque canal de distribution parallèle.

12. Système selon l'une quelconque des revendications précédentes,
**caractérisé en ce**
**que** le moteur de poussée de l'agencement de cache centrale est responsable pour pousser le contenu des informations de données vers les postes d'utilisateurs finaux de plusieurs segments.

13. Système selon l'une quelconque des revendications précédentes,
**caractérisé en ce**
**qu'**il il y a un seul moyen de contrôle de l'agencement de cache centrale et un seul moteur de poussée pour chaque segment.

14. Système selon l'une quelconque des revendications précédentes,
**caractérisé en ce**
**que** les informations de contenu, comprenant des listes provenant des moyens de planification de la transmission sont transmises aux postes d'utilisateurs finaux à l'intérieur du segment concerné permettant à l'utilisateur final de sélectionner des informations de données pour la demande, ou que le contenu multimédia est étiqueté.

15. Système selon l'une quelconque des revendications précédentes,
**caractérisé en ce**
**que** l'agencement de cache centrale comprend un nombre de moteurs subordonnés de contrôle du cache, et un moteur de contrôle du cache maître supérieur contrôlant lesdits moteurs subordonnés de contrôle de cache, et coordonnant les transmissions et la prise en charge de l'itinérance du segment du poste de l'utilisateur final.

16. Système selon l'une quelconque des revendications précédentes,
**caractérisé en ce**
**que** le moyen de planification de la transmission utilise un algorithme comprenant des informations sur le contenu estimé/prédit et une demande de l'utilisateur final pour minimiser l'attente entre la demande de l'utilisateur final et la présentation à l'utilisateur final.

17. Système selon l'une quelconque des revendications précédentes,
**caractérisé en ce**
**que** 1'intercommunication de l'utilisateur final est activée pour le transfert des informations d'un poste utilisateur final d'un segment vers un autre poste utilisateur final d'un autre, segment partiellement chevauchant, lorsque des informations de données partiellement différentes sont fournies au segment partiellement chevauchant (Bluetooth).

18. Système selon l'une quelconque des revendications précédentes,
**caractérisé en ce**
**que** les demandes de l'utilisateur final pour le direct, la vidéo ou les informations de streaming, le client du poste d'utilisateur final peut se connecter séparément au flux de multidiffusion/diffusion générale sans que le contenu passe à travers le cache local.

19. Système selon l'une quelconque des revendications précédentes,
**caractérisé en ce**
**que** la retransmission du contenu provenant du serveur central peut être demandée, et qu'une limite temporelle est donnée de sorte que si la transmission du contenu arrive à échéance avec l'intervalle de temps, aucune retransmission n'est demandée au moteur cache.

20. Système selon l'une quelconque des revendications précédentes,
**caractérisé en ce**
**que** le réseau sans fil est basé sur l'IP, WLAN, HIPERLAN 2, 3, 4, IEEE
802.11, UMTS, GSM/GPRS, EDGE, PDC, CDMA, WCDMA, CDMA 2000, des réseaux hybrides avec DVB et une fois de retour, les caches locaux du contenu poussé particulièrement comprenant les serveurs proxy.

21. Poste d'utilisateur final dans un réseau sans fil compatible avec la communication des informations de données, par ex., un contenu multimédia,
**caractérisé en ce**
**qu'**il comprend ou qu'il est associé avec des moyens de captage de contenu de poussée locale, propriétaire pour le maintien des informations de données poussées à travers la multidiffusion/la diffusion générale vers un poste d'utilisateur final par moyen de serveur central contrôlant la poussée des informations de données vers au moins un segment du réseau sans fil dans lequel le poste d'utilisateur final est connecté/localisé, et en ce que suite à une demande, des informations de données personnalisées, sélectionnés peuvent être récupérées à partir des moyens de captage de contenu poussée local vers le client du poste d'utilisateur final.

22. Poste d'utilisateur final selon la revendication 21,
**caractérisé en ce**
**qu'**il comprend des moyens pour recevoir des informations concernant les informations poussées, ou qui seront poussées, vers le poste d'utilisateur final, de sorte que l'utilisateur final peut baser les demandes sur lesdites informations pour sélectionner le contenu souhaité qui doit être présenté à un moment souhaité.

23. Poste d'utilisateur final selon la revendication 21 ou 22,
caractérisé en ce
la cache de contenu poussé propriétaire comprend un proxy.

24. Poste d'utilisateur final selon l'une quelconque des revendications 21 à 23,
**caractérisé en ce**
**que** les données d'informations comprennent un contenu multimédia, comprenant la vidéo en direct, les vidéoclips, les pages Web, l'audio, le HTML, le GIF, les fichiers JPEG, des applications, des données de capteur.

25. Poste d'utilisateur final selon l'une quelconque des revendications 21 à 24,
**caractérisé en ce**
**qu'**il comprend un a PDA, un téléphone portable, un terminal portable un quelconque équipement sans fil.

26. Procédé pour, dans un réseau sans fil, communiquer des informations de données, par ex., un contenu multimédia à des postes d'utilisateur final,
**caractérisé en ce**
**qu'**il comprend les étapes suivantes :
- le stockage d'au moins des parties choisies des informations de données pertinentes pour les postes d'utilisateur final d'au moins un segment du réseau sans fil dans un agencement de stockage/cache central d'un moyen de serveur central ;
- la réalisation d'une procédure de planification de transmission afin de fournir des informations de planification ;
- l'utilisation desdites informations de planification pour contrôler la poussée multidiffusion/diffusion générale des informations de données pertinentes vers les postes d'utilisateur final de l'au moins un segment ;
- la fourniture des informations de contenu vers les postes d'utilisateur final ;
- le stockage dans des moyens de captage de contenu de poussée locale/propriétaire des postes d'utilisateur final respectifs, des informations de données poussées,
de sorte que chacun des postes utilisateur final éventuellement, d'une façon personnalisée, peut demander et accéder à des données d'information telles qu'un contenu multimédia à partir des moyens de captage du contenu de poussée locaux, propriétaires.
